# FASCICULE DE BREVET EUROPEEN

(11) **EP 2 301 785 B1**
(45) Date de publication et mention de la délivrance du brevet: **08.08.2012**
(21) Numéro de dépôt: 09305888.1
(22) Date de dépôt: 23.09.2009
(51) Int. Cl.: B60J 7/02, B60J 10/12

(54) **Dispositif d'obturation d'une baie ménagée dans le toit d'un véhicule automobile, équipé d'une barrière d'étanchéité et d'une évacuation d'eau vers l'extérieur.**
Verschlussvorrichtung eines Dachausschnittes eines Kraftfahrzeugs , mit einer Abdichtungssperre und einer nach außen gerichteten Wasserableitung
Device for closing a roof opening of an automobile, equipped with a sealing barrier and a water outlet.

(43) Date de publication de la demande: 30.03.2011
(73) Titulaire: Advanced Comfort Systems France SAS - ACS France, 79300 Bressuire (FR)
(72) Inventeur: Neaux, Jean-Claude, 79300, TERVES (FR); Leboeuf, Régis, 85130, LES LANDES GENUSSON (FR); Maltaverne, Guy, 79300, BRESSUIRE (FR)
(74) Mandataire: Bioret, Ludovic

(56) Documents cités:
- EP-A- 0 331 910
- EP-A1- 2 189 313
- WO-A-2008/068325

## Description

### 1. Domaine de l'invention

Le domaine de l'invention est celui des toits ou pavillons de véhicules automobiles. Plus précisément, l'invention concerne les pavillons vitrés comprenant au moins une ouverture coopérant avec un panneau vitré mobile coulissant.

Dans le cadre de la présente demande, on entend par le terme « panneau vitré » tout panneau (fixe ou mobile) substantiellement transparent ou translucide participant au clair de baie, réalisé en verre ou en tout matériau adapté, tel que le polycarbonate. Les bords du panneau peuvent être opacifiés, par exemple par sérigraphie. Dans certains modes de réalisation, le panneau peut être constitué de plusieurs éléments affleurants, vus de l'extérieur, et, le cas échéant, au moins un des ces éléments peut être opaque, et par exemple en métal.

Un dispositif selon l'invention peut en outre équiper une baie formée dans une partie sensiblement horizontale de la carrosserie du véhicule, autre que le pavillon.

### 2. Techniques de l'art antérieur

La tendance actuelle, en matière de véhicule automobile, qu'il s'agisse d'une automobile, d'un véhicule utilitaire, d'un camion, ou d'un autobus, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

De façon à augmenter le clair de baie, on a d'autre part cherché à proposer des surfaces vitrées de grande taille tout en minimisant le nombre de panneaux vitrés du pavillon. Par exemple, la lunette arrière ou le pare-brise peuvent se trouver dans le prolongement du pavillon vitré, pour assurer un aspect visuel de continuité (sans cadre ni montant de séparation visible et formant saillie, vue de l'extérieur, même si, en pratique, ils correspondent à des éléments vitrés distincts).

Il a également fallu tenir compte du fait que ces surfaces vitrées doivent s'intégrer dans les pavillons de véhicules actuels ou futurs qui présentent des formes fuyantes et sont généralement non plans et le plus souvent incurvés ou galbés dans le sens de la largeur et également, parfois, dans le sens de la longueur.

D'autre part, on a proposé des solutions pour dégager des ouvertures dans le pavillon, notamment pour pouvoir former un module de toit ouvrant.

Ainsi, une technique répandue pour libérer une ouverture dans le pavillon consiste à faire basculer une vitre mobile montée sur un cadre vers l'extérieur du véhicule autour d'un axe solidaire du plan du pavillon, pour libérer un passage entre la vitre et le cadre.

Cette technique présente l'inconvénient de ne permettre qu'un entrebâillement de la vitre afin d'éviter son arrachement sous l'effet de la pression aérodynamique et de ne pouvoir généralement être mise en oeuvre que pour des vitres de petite taille.

Une autre technique de toit ouvrant également utilisée de façon classique consiste à rendre la vitre mobile au-dessus ou au-dessous du pavillon dans un plan sensiblement parallèle au plan du pavillon. On connaît ainsi une première technique de pavillon percé d'une baie pouvant être obturée par un panneau vitré coulissant logé dans la garniture du pavillon. Un inconvénient de cette technique est que les dimensions des ouvertures dans le pavillon, et consécutivement des surfaces vitrées permettant de les obturer, sont limitées.

Un problème commun à ces techniques de toit ouvrant est que de l'eau, par exemple sous forme de gouttes de condensation ou de pluie, est susceptible de pénétrer à l'intérieur de l'habitacle lorsque la vitre mobile ou le panneau coulissant libère au moins en partie l'ouverture formée dans le pavillon.

Pour remédier à ce problème, on a proposé d'équiper le contour de la vitre mobile d'un bac périphérique de récupération d'eau dans lequel est recueillie l'eau s'étant déposée sur la surface de la vitre mobile.

Un inconvénient de cette technique est que le bac peut se remplir complètement, et, dans certains cas, déborder. Le trop-plein d'eau peut se déverser alors dans l'habitacle au travers de l'ouverture, ce qui n'est bien sûr pas satisfaisant.

On a constaté notamment avec ces techniques que cet inconvénient est amplifié par le fait que le bac se remplit surtout d'eau hors des périodes où le toit ouvrant est ouvert, ou en d'autres termes lorsque le toit ouvrant est fermé, ce qui réduit fortement l'efficacité du bac.

Un autre inconvénient de cette technique est la nécessité de la présence d'un bac de récupération d'eau qui réduit le clair de baie et/ou la taille admissible de l'ouverture sur l'extérieur, et/ou le volume de l'habitacle.

Encore un inconvénient de cette technique, et d'autres techniques de toit ouvrant connues, est que les éléments prévus pour la récupération d'eau peuvent nuire à l'esthétique du véhicule.

On a également proposé d'évacuer l'eau vers l'extérieur du véhicule.

Un inconvénient des techniques connues prévoyant une évacuation de l'eau est qu'elles sont généralement complexes à mettre en oeuvre, notamment lorsqu'il s'agit d'évacuer l'eau qui s'est déposée sur le panneau vitré coulissant.

Un inconvénient encore des techniques connues évoquées ci-dessus, est que, dans certains cas, de l'eau peut stagner et croupir dans le bac de récupération et/ou l'évacuation d'eau, en émettant une odeur désagréable.

### 3. Objectifs de l'invention

L'invention a notamment pour objectif de pallier les différents inconvénients de ces techniques connues.

Plus précisément, un objectif de l'invention est, au moins dans un mode de réalisation particulier, de fournir une technique d'obturation d'une baie horizontale ménagée dans la carrosserie d'un véhicule, et dotée d'une ouverture pouvant être libérée par un panneau vitré mobile, qui permette une évacuation de l'eau s'étant déposé sur la surface extérieure qui soit efficace, quelle que soit la position d'ouverture occupée par le panneau vitré mobile.

Un autre objectif est, au moins dans un mode de réalisation particulier, de fournir une telle technique qui soit simple à mettre en oeuvre.

Un objectif de l'invention est également, au moins dans un mode de réalisation particulier, de fournir une telle technique qui permette une ouverture maximisée.

Un objectif de l'invention est, au moins dans un mode de réalisation particulier, de réduire ou supprimer sinon la présence, du moins l'impression visuelle de rupture que constitue la vitre mobile déportée, ou le panneau vitré, de manière qu'elle soit perçue comme une portion transparente ne présentant pas de discontinuité avec la carrosserie.

L'invention a également pour objectif, au moins dans un mode de réalisation particulier, de fournir une telle technique, ne réduisant pas, ou peu, le clair de baie.

Dans au moins un mode de réalisation particulier de l'invention, un objectif de l'invention est de fournir une telle technique, qui permette de simplifier la fabrication et le montage d'un pavillon sur une baie de toit, et donc de réduire fortement les coûts correspondants.

Encore un autre objectif de l'invention est, au moins dans un mode de réalisation particulier, de fournir une telle technique, permettant un remplacement d'une vitre fixe montée dans une baie de véhicule par un dispositif d'obturation selon l'invention, sans adaptation particulière sur la baie et plus généralement sur le véhicule.

### 4. Exposé de l'invention

Ces objectifs, ainsi que d'autres qui apparaîtront plus clairement par la suite, sont atteints à l'aide d'un dispositif d'obturation d'une baie conforme au préambule de la revendication 1.

L'invention concerne ainsi, notamment, des dispositifs du type de ceux décrits, par exemple, dans le document WO 2008/068 325, qui permettent de faire affleurer la face tournée vers l'extérieur du panneau vitré mobile avec la partie fixe et/ou cette dernière avec un élément de châssis de la carrosserie, vu de l'extérieur du véhicule.

Selon l'invention, un tel dispositif d'obturation comprend les caractéristiques de la partie caractérisante de la revendication 1.

Cette approche permet d'assurer, de façon inédite, que les occupants du véhicule seront protégés de la projection ou de la chute de gouttes d'eau qui se sont déposées sur la surface extérieure du dispositif, et notamment du panneau mobile, par exemple en cas d'averse, du fait que le dispositif permet de récupérer et d'évacuer cette eau vers l'extérieur du véhicule, dans toutes les positions d'ouverture du panneau mobile.

Par ailleurs, dans la position d'obturation, la fermeture de l'ouverture interdit l'accès et donc le remplissage des moyens de récupération et d'évacuation d'eau, qui restent donc pleinement efficients en cas de libération de l'ouverture. Et quand bien même une quantité d'eau résiduelle viendrait à pénétrer inopinément jusqu'aux moyens de récupération et d'évacuation, le dispositif selon l'invention permet de l'évacuer vers l'extérieur.

Selon un mode de réalisation avantageux de l'invention, lesdits moyens de fermeture sont formés par des moyens pour rendre étanche ladite ouverture, lorsque ledit panneau mobile est dans ladite position d'obturation.

Selon une approche particulièrement simple, ces moyens assurant la fermeture et l'étanchéité de l'ouverture empêchent donc également les moyens de récupération et d'évacuation d'eau de se remplir dans la position d'obturation.

Ces moyens d'étanchéité de l'ouverture du dispositif peuvent, par exemple être des cordons ou des joints d'étanchéité, ou tout autre élément déformable adapté, rendant l'ouverture étanche en position d'obturation quelles que soient les conditions climatiques et/ou d'utilisation (pluie fine, pluie abondante, lavage au moyen d'un jet sous pression, ...).

Ils peuvent également être constitués, dans certains modes de réalisation particuliers de l'invention, d'un clapet ou de tout autre élément articulé approprié, dont l'état peut être contrôlé, par exemple, par des moyens de déverrouillage du panneau mobile.

Préférentiellement, lesdits moyens pour rendre étanche ladite ouverture comprennent au moins un joint d'étanchéité monté de façon à être comprimé contre la face tournée vers l'intérieur du véhicule de ladite partie fixe en position d'obturation, lesdits accès auxdits moyens de récupération et d'évacuation comprenant au moins un passage d'eau formé dans un cadre dudit panneau mobile, bouchés par ledit joint d'étanchéité lorsque celui-ci est comprimé.

Ce ou ces joints peuvent par exemple présenter au moins deux lèvres distinctes pour assurer l'étanchéité de l'ouverture et l'obstruction de l'accès au ou aux passage(s) d'évacuation d'eau.

Selon un aspect particulier de l'invention, lesdits moyens de récupération et d'évacuation d'eau comprennent au moins un élément de goulotte formé et/ou solidaire d'un cadre dudit panneau mobile.

Un tel élément de goulotte, pouvant par exemple présenter une forme de gouttière dans au moins un mode de réalisation particulier de l'invention, permet ainsi de recueillir l'eau sur tout ou partie du contour du panneau vitré mobile.

Dans au moins un mode de réalisation particulièrement avantageux de l'invention, ledit élément de goulotte empiète au moins partiellement sur l'habitacle dudit véhicule en vis-à-vis de ladite partie fixe.

Ainsi, l'eau ruisselant de la partie fixe au travers de l'ouverture tombe dans l'élément de goulotte, qui va permettre de l'évacuer. L'élément de goulotte assure donc une fonction supplémentaire de « barrière » d'étanchéité, protégeant l'habitacle. En outre, en position d'obturation, si l'étanchéité obtenue n'est pas parfaite en raison par exemple, de migrations d'eau par capillarité, les gouttes d'eau suintantes peuvent être recueillies dans l'élément de goulotte afin d'être évacuées.

Avantageusement, ledit panneau mobile présente un cadre configuré pour permettre l'écoulement par gravité d'au moins une partie de ladite eau vers au moins un desdits doigts de guidage.

On évite ainsi que de l'eau stagne sur certaines portions ou cavités de la surface du panneau mobile, et forme des poches.

Selon un aspect avantageux de l'invention, ledit rail présente des moyens de guidage de l'eau vers au moins une de ses extrémités à l'avant ou à l'arrière dudit véhicule.

L'eau évacuée peut ainsi être projetée vers l'extérieur par la vitesse du véhicule sans risque qu'elle retombe sur le pavillon et/ou le dispositif d'obturation.

Selon un mode de réalisation particulier de l'invention, lesdits moyens de guidage comprennent un canal d'évacuation formé dans une portion dudit rail.

Il est ainsi pas nécessaire de prévoir un élément spécifique supplémentaire de guidage de l'eau autre que le rail, ce qui rend le dispositif particulièrement simple.

De façon préférentielle, ledit panneau mobile présente un galbe dans au moins deux directions horizontales, de sorte à faire ruisseler ladite eau vers au moins un de ses bords.

Ainsi, l'eau ne s'accumule pas sur la surface du panneau vitré mobile, ce qui évite les projections dans l'habitacle en cas de secousse et améliore la visibilité au travers du panneau mobile.

L'invention concerne également un véhicule automobile équipé d'un des dispositifs d'obturation tels que décrits ci-dessus.

### 5. Liste des figures

D'autres caractéristiques et avantages de l'invention apparaîtront plus clairement à la lecture de la description suivante d'un mode de réalisation particulier de l'invention, donnée à titre de simple exemple illustratif et non limitatif, et des dessins annexés, parmi lesquels :
- la figure 1 illustre, dans une vue en perspective de dessous, un mode de réalisation d'un dispositif d'obturation selon l'invention formant un pavillon d'un véhicule, dans une position d'ouverture partielle ;
- la figure 2 est une vue de détail d'une partie du parcours d'évacuation d'eau incorporé sur le panneau mobile du dispositif présenté sur la figure 1 ;
- la figure 3 est une vue en coupe verticale suivant A-A, au niveau d'un pion de guidage, du dispositif représenté figure 1 ;
- la figure 4 précise le chemin d'évacuation de l'eau vers l'avant ou l'arrière du véhicule, le long du pavillon ;
- la figure 5 est une vue en coupe, de la zone du joint solidaire du cadre du panneau mobile, dans la position d'obturation, où il est comprimé ;
- les figures 6 et 7 illustrent un autre mode de réalisation de l'invention, permettant un accès aux moyens de récupération et d'évacuation d'eau sous les moyens destinés à rendre l'ouverture étanche ;
- la figure 8 est une vue en coupe verticale et transversale d'une autre variante du dispositif présenté figures 1 à 5, au niveau du pion de guidage avant droit.

### 6. Description détaillée d'un mode de réalisation de l'invention

### 6.1. Rappel du principe de l'invention

Comme précédemment évoqué, le principe général de l'invention repose donc sur la mise en oeuvre d'une évacuation de l'eau s'étant déposée au niveau du toit, sur la surface extérieure du panneau mobile ou sur celle de la partie fixe, vers l'extérieur du véhicule, dès que le panneau mobile est dans une quelconque position d'ouverture, et donc que l'ouverture est libérée, et exclusivement dans ce cas.

Dans au moins un mode de réalisation de l'invention, cette nouvelle approche permet notamment de former une barrière d'étanchéité efficace pour l'ouverture formée dans la partie fixe et par conséquent pour l'habitacle, lorsque le panneau mobile est fermée.

### 6.2. Exemple de mode de réalisation de l'invention

Par la suite, on considère un pavillon de véhicule formé d'un dispositif d'obturation selon l'invention, lequel est rapporté sur la carrosserie du toit du véhicule.

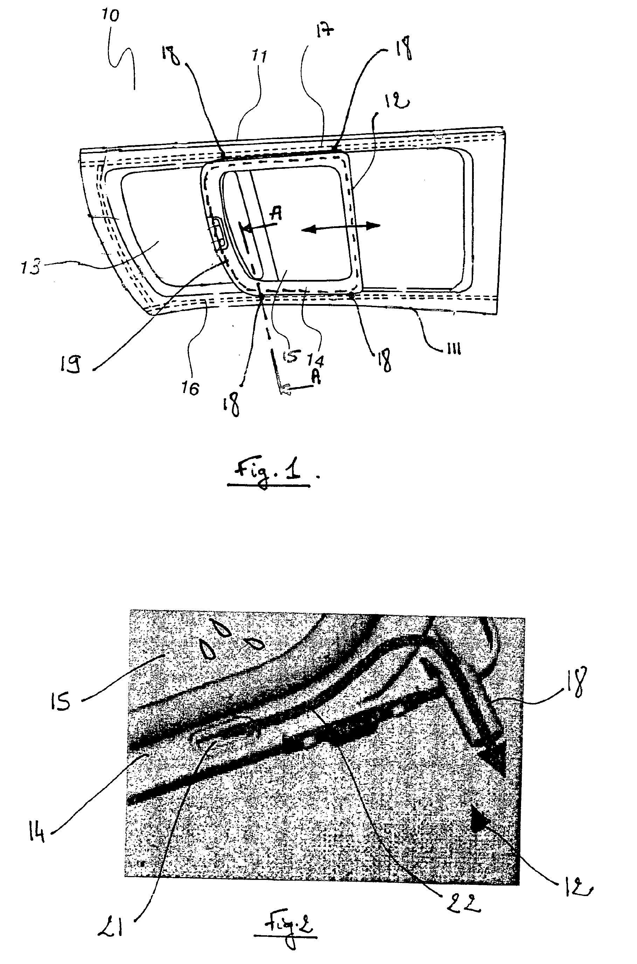

La figure 1 illustre dans une vue en perspective un mode de réalisation particulier de l'invention pour lequel le contour extérieur 111 du panneau fixe 11 d'un dispositif d'obturation 10 selon l'invention, constituant un pavillon (ou au moins une partie de pavillon), est prévu pour être solidarisé par collage, de manière affleurante, sur une bordure de réception (non représentée) du toit tôlé du véhicule.

La partie fixe est constituée d'un panneau vitré monobloc 11, par exemple en verre trempé ou en polycarbonate. Elle est avantageusement galbée, notamment pour donner au pavillon une forme répondant aux critères actuels en termes de design, de confort ou de pénétration dans l'air, ...

Un panneau vitré mobile 12, par exemple en polycarbonate thermoformé, représenté sur la figure 1 en position d'ouverture partielle, permet de fermer une ouverture 13 formée dans la partie fixe 11.

Ce panneau mobile 12 peut coulisser, à l'intérieur du véhicule, sous la partie fixe 11 selon une direction, ou axe, de coulissement sensiblement horizontale, pour venir obturer ou libérer l'ouverture 13. Lors de la fermeture de l'ouverture, le panneau mobile 12 est déplacé successivement par rapport à la partie fixe 11 :
- dans le plan de coulissement, parallèle au plan formé par la partie fixe, à partir de la position représentée sur la figure 1, où l'ouverture est partiellement libérée, vers une position de dégagement dans laquelle le panneau mobile se trouve sensiblement en regard de l'ouverture et est décalé par rapport à la partie fixe ; et
- suivant un mouvement de louvoiement selon une courbe montante pour permettre le passage du panneau mobile de la position de dégagement à une position d'obturation, dans laquelle le panneau mobile se trouve dans le même plan que la partie fixe, encore appelé plan d'obturation, et obture l'ouverture.

Le panneau mobile 12 présente un cadre 14 à l'intérieur duquel est encapsulé une vitre 15. Ce cadre s'étend sur la face du panneau mobile orientée vers l'intérieur du véhicule, de façon à assurer un aspect affleurant, vu de l'extérieur. Il est guidé par deux rails 16, 17 collés sur la face intérieure de la partie fixe 11 à l'aide de quatre doigts 18, ou pions, qui saillissent latéralement du cadre 14. Un cordon, ou joint, d'étanchéité 19, collé sur la face supérieure du cadre 14 est prévu pour réaliser une étanchéité entre le panneau mobile 12 et la partie fixe 11 en position d'obturation, et donc rendre étanche l'ouverture 13.

Comme on peut le voir sur la figure 2, dans une vue de détail du panneau mobile 12, des gouttes d'eau ou des traces d'humidité se déposant sur la face supérieure (extérieure) du panneau mobile 12 peuvent ruisseler sur la vitre 15, laquelle est galbée dans deux directions à cet effet. Cette quantité d'eau est récupérée dans des cavités 21, ou réservoirs, formées dans l'épaisseur du cadre 14.

Afin d'évacuer l'eau récupérée dans les cavités 21 vers l'extérieur du véhicule, on a prévu des éléments de goulotte 22 communiquant avec les pions 18. Les éléments 22 sont avantageusement formés directement dans le cadre 14. Ils présentent avantageusement une pente étudiée pour permettre l'écoulement gravitaire de l'eau en direction des pions 18.

Dans des variantes de ce mode de réalisation, il peut également être envisagé de solidariser sur le cadre 14 des éléments de goulotte obtenus séparément.

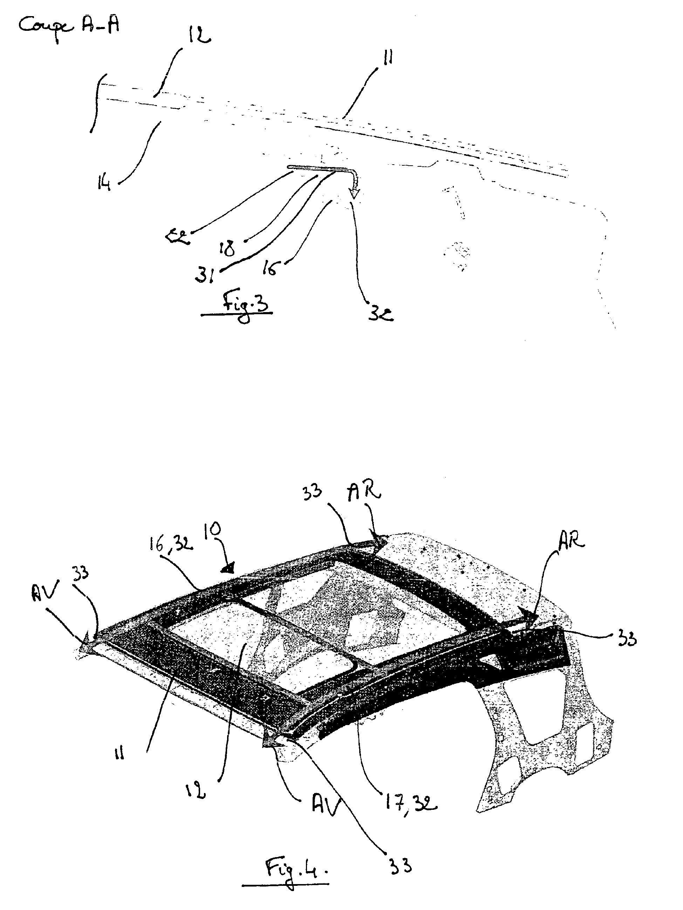

Comme il apparaît plus clairement sur la figure 3, qui est une vue en coupe verticale suivant A-A (voir la figure 1) du dispositif 10 effectuée au niveau d'un pion 18, chacun de ces pions 18 (ou au moins certains d'entre eux) est percé de part en part d'un canal interne débouchant 31, ce qui permet à l'eau s'écoulant dans les goulottes 22 de se déverser dans un canal d'évacuation 32 formé dans une portion du rail 16, 17 adjacent. Il convient de noter que l'évacuation d'eau est rendu possible au travers des pions quelle que soit la position d'ouverture occupée par le panneau mobile (ouverte ou fermée).

Du fait du galbe imprimé aux rails 16, 17 pour épouser la forme du pavillon, l'eau va ensuite s'écouler dans le canal 32 soit vers l'avant du véhicule, dans la direction indiquée par les flèches AV, ou soit vers l'arrière, dans la direction indiquée par les flèches AR (voir la figure 4), pour être évacuée vers l'extérieur à proximité des extrémités des rails, au travers d'orifices ou d'évents 33.

On note par ailleurs sur la figure 3, que le cadre 14 présente des dimensions légèrement supérieures à celles de l'ouverture. Ce recouvrement permet de récupérer dans les cavités et/ou les éléments de goulotte l'eau résiduelle se trouvant sur la face supérieure de la partie fixe et susceptible de tomber au travers de l'ouverture. On a ainsi constitué une barrière d'étanchéité en toute position ouverte.

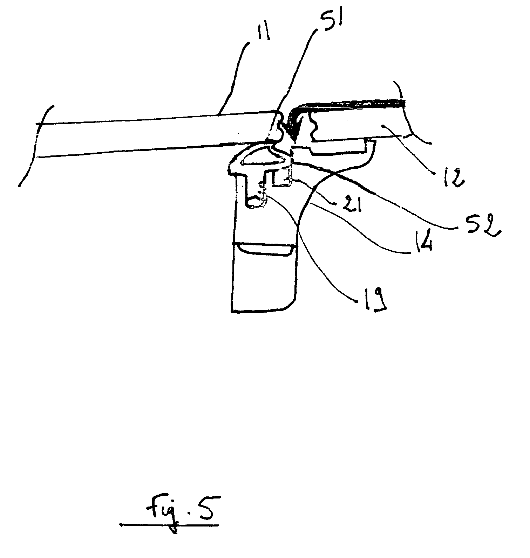

On présente figure 5 une vue partielle (du côté gauche), en coupe verticale, du dispositif illustré figure 1, après fermeture de l'ouverture.

Ainsi qu'illustré sur la figure 5, la lèvre supérieure 51 du joint 19 est comprimée contre la face intérieure de la partie fixe 11 dans la position d'obturation, ce qui assure l'étanchéité de l'ouverture 13.

Par ailleurs, dans cette position d'obturation, la portion 52 du joint 19, qui s'est déformée, obstrue l'accès aux cavités 21. Seules de très faibles quantités d'eau peuvent donc pénétrer dans le parcours d'évacuation d'eau, par exemple en diffusant au travers ou le long du joint par le phénomène de capillarité, ce qui empêche donc que de l'eau envahisse ou stagne dans ce circuit.

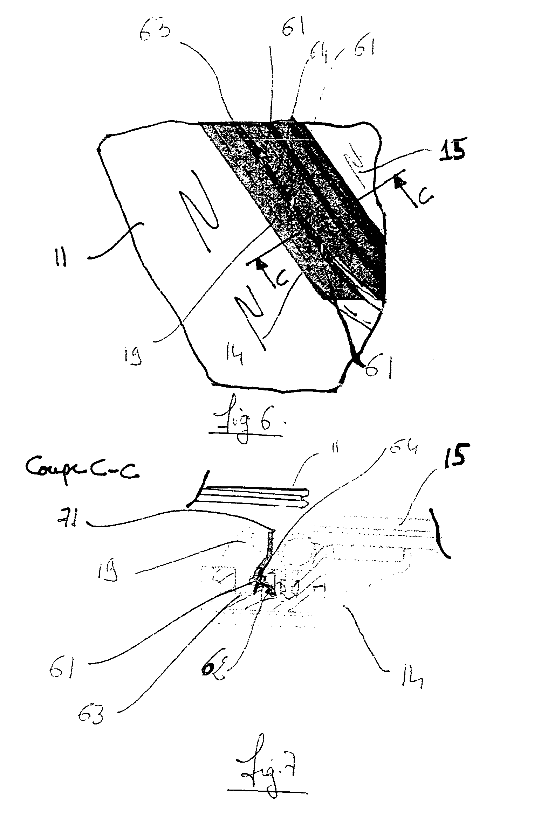

Dans une variante de ce mode de réalisation de l'invention, présentée en relation avec les figures 6 et 7, l'accès à la goulotte d'évacuation d'eau 62 peut être formée d'une pluralité de lumières 61 au travers d'une paroi 64 de la rainure 63, aménagée à proximité de la bordure du cadre 14 et destinée à recevoir le pied du joint 19 (représenté en traits pointillés sur cette figure 6, pour plus de clarté).

En position d'obturation, le pied du joint 19 est comprimé dans la rainure 63, et obstrue les lumières 61. En position d'ouverture, lorsque le panneau coulissant est dégagé du plan de l'ouverture, le joint 19 est décomprimé et a donc retrouvé une forme non déformée. Un passage vers les lumières 61, illustré symboliquement par la flèche 71 dans la vue en coupe verticale C-C présenté figure 7, est dégagé sous le joint 19, ce qui permet d'évacuer l'eau.

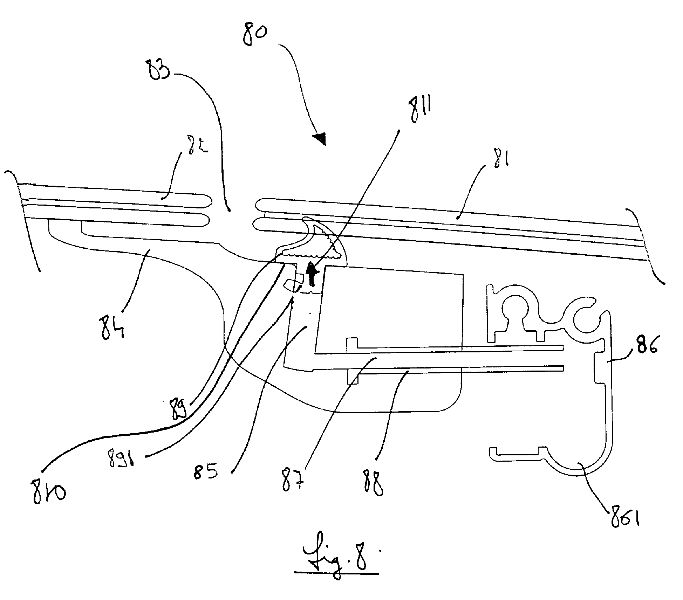

Une autre variante du mode de réalisation de l'invention présenté en référence aux figures 1 à 5 est illustrée figure 8, par une vue partielle en coupe verticale et transversale d'un dispositif d'obturation 80 selon l'invention présentant une partie fixe 81 et un panneau mobile 82, au niveau du plan de symétrie du pion de guidage avant droit 88 du panneau mobile 82.

Comme on peut le voir sur la figure 8, le panneau mobile 82 obture l'ouverture 83 formée dans le plan de la partie fixe 81 (position d'obturation).

Un joint élastomère 89, comprimé au niveau de sa lèvre supérieure contre la face de la partie fixe tournée vers l'intérieur du véhicule assure une étanchéité, au moins partielle, entre la partie fixe 81 et le cadre 84 du panneau mobile. Dans la position d'obturation, son pied 891, sous la pression de la partie fixe, est repoussé dans une gorge de passage d'eau 85, formée dans le cadre 84 et communiquant avec un conduit 87 d'évacuation d'eau vers l'extérieur, au travers du pion 88, dont il bouche l'accès de l'extérieur.

Lorsque le panneau mobile coulisse vers l'arrière du véhicule et dégage au moins partiellement l'ouverture, le joint 89 se décomprime. Le pied 891 peut ainsi remonter dans la gorge 85, par effet d'élasticité, suivant la direction indiquée par la flèche 811, ce qui libère un passage 810 sous le joint 89, permettant à l'eau s'étant déposée sur la face extérieure du panneau mobile d'être évacuée vers l'avant ou l'arrière du véhicule, via successivement la gorge 85, le conduit 88 et une goulotte 861 formée dans le rail 86.

### 6.3. Autres caractéristiques et avantages de l'invention

D'autres variantes du mode de réalisation de l'invention décrit ci-dessus peuvent être envisagées parmi lesquelles :
- le joint d'étanchéité entre le panneau mobile et la partie fixe peut prendre toute forme appropriée et peut notamment présenter plusieurs lèvres et/ou pieds ;
- le canal d'évacuation d'eau le long de la partie fixe peut être réalisée dans une ou plusieurs pièces distinctes du rail ;

Dans un mode de réalisation complémentaire du mode de réalisation présenté ci-dessus, il peut également être prévu que l'invention, ou au moins certains aspects du dispositif selon l'invention, soient mis en oeuvre pour obturer une surface sensiblement horizontale du véhicule autre que son pavillon.

## Revendications

1. Dispositif d'obturation (10) d'une baie ménagée dans le toit d'un véhicule automobile, comprenant une partie fixe (11) vitrée destinée à être solidarisée audit véhicule et au moins un panneau vitré mobile (12) par rapport à la partie fixe (11) entre une position d'obturation, dans laquelle il obture une ouverture (13) définie dans ladite partie fixe (11), et au moins une position d'ouverture, dans laquelle ladite ouverture (13) est au moins partiellement libérée,
ledit panneau mobile (12) étant guidé en coulissement le long de deux rails (16, 17) solidarisés à la surface de ladite partie fixe (11), dispositif comprenant des moyens de récupération et d'évacuation vers l'extérieur dudit véhicule d'au moins une partie de l'eau reçue sur la surface extérieure dudit panneau mobile (12), dispositif **caractérisé en ce que** lesdits moyens de récupération et d'évacuation comprennent au moins un passage (31) formé de part en part d'un doigt de guidage (18) dudit panneau mobile (12) dans un desdits rails (16, 17), pour permettre le passage de ladite eau dudit panneau mobile (12) vers un desdits rails,
et **en ce qu'**il comprend des moyens de fermeture d'au moins un accès auxdits moyens de récupération et d'évacuation dans ladite position d'obturation, configurés de sorte à empêcher lesdits moyens d'évacuation de recevoir ladite eau dans ladite position d'obturation.

2. Dispositif d'obturation (10) selon la revendication 1, **caractérisé en ce que** lesdits moyens de fermeture sont formés par des moyens pour rendre étanche ladite ouverture (13), lorsque ledit panneau mobile (12) est dans ladite position d'obturation.

3. Dispositif d'obturation (10) selon la revendication 2, **caractérisé en ce que** lesdits moyens pour rendre étanche ladite ouverture (13) comprennent au moins un joint d'étanchéité (19) monté de façon à être comprimé contre la face tournée vers l'intérieur du véhicule de ladite partie fixe (11) en position d'obturation,
lesdits accès auxdits moyens de récupération et d'évacuation comprenant au moins un passage d'eau formé dans un cadre (14) dudit panneau mobile (12), bouchés par ledit joint d'étanchéité (19) lorsque celui-ci est comprimé.

4. Dispositif d'obturation (10) selon l'une quelconque des revendications 1 à 3, **caractérisé en ce que** lesdits moyens de récupération et d'évacuation comprennent au moins un élément de goulotte (22) formé et/ou solidaire d'un cadre (14) dudit panneau mobile (12).

5. Dispositif d'obturation (10) selon la revendication 4, **caractérisé en ce que** ledit élément de goulotte empiète au moins partiellement sur l'habitacle dudit véhicule en vis-à-vis de ladite partie fixe (11).

6. Dispositif d'obturation (10) selon l'une quelconque des revendications 1 à 5, **caractérisé en ce que** ledit panneau mobile (12) présente un cadre (14) configuré pour permettre l'écoulement par gravité d'au moins une partie de ladite eau vers au moins un desdits doigts de guidage (18).

7. Dispositif d'obturation (10) selon l'une quelconque des revendications 1 à 6, **caractérisé en ce que** ledit rail (16, 17) présente des moyens de guidage de l'eau vers au moins une de ses extrémités à l'avant ou à l'arrière dudit véhicule.

8. Dispositif d'obturation (10) selon la revendication 7, **caractérisé en ce que** lesdits moyens de guidage comprennent un canal d'évacuation formé dans une portion dudit rail (16, 17).

9. Dispositif d'obturation (10) selon l'une quelconque des revendications 1 à 8, **caractérisé en ce que** ledit panneau mobile (12) présente un galbe dans au moins deux directions horizontales, de sorte à faire ruisseler ladite eau vers au moins un de ses bords.

10. Véhicule automobile comprenant au moins une baie ménagée dans la carrosserie de son toit, **caractérisé en ce qu'**il comprend au moins un dispositif d'obturation (10) selon l'une quelconque des revendications 1 à 9, fixé de façon affleurante à ladite carrosserie pour obturer ladite baie.

## Claims

1. Closing device (10) for an opening arranged in the roof of a motor vehicle, said device comprising a glazed fixed part (11) which is intended to be fastened to the said vehicle, and at least one glazed panel (12) which is movable in relation to the fixed part (11) between a closing position, in which it closes an aperture (13) defined in the said fixed part (11), and at least one opening position, in which the said aperture (13) is at least partially unblocked; the said movable panel (12) being guided in sliding motion along two rails (16, 17) fastened to the surface of the said fixed part (11), the said device comprising means for collecting and evacuating towards the outside of the said vehicle at least part of the water received on the outer surface of the said movable panel (12),
the said device being **characterised in that** the said collecting and evacuating means comprise at least one passage (31) which is formed on either side of a finger (18) for guiding the said movable panel (12) in one of the said rails (16, 17), so as to permit the passage of the said water from the said movable panel (12) towards one of the said rails,
and **in that** said device comprises means for shutting-off at least one access to the said collecting and evacuating means in the said closing position, which shutting-off means are configured in such a way as to prevent the said evacuating means from receiving the said water in the said closing position.

2. Closing device (10) according to claim 1, **characterised in that** the said shutting-off means are formed by means for making the said aperture (13) watertight when the said movable panel (12) is in the said closing position.

3. Closing device (10) according to claim 2, **characterised in that** the said means for making the said aperture (13) watertight comprise at least one seal (19) which is mounted in such a way as to be compressed against that face of the said fixed part (11) which faces towards the interior of the vehicle in the closing position, the said accesses to the said collecting and evacuating means comprising at least one water passage which is formed within a frame (14) of the said movable panel (12), and being blocked by the said seal (19) when the latter is compressed.

4. Closing device (10) according to any of claims 1 to 3, **characterised in that** the said collecting and evacuating means comprise at least one chute element (22) which is made up of, and/or integral with, a frame (14) belonging to the said movable panel (12).

5. Closing device (10) according to claim 4, **characterised in that** the said chute element overlaps, at least partially, the passenger compartment of the said vehicle opposite the said fixed part (11).

6. Closing device (10) according to any of claims 1 to 5, **characterised in that** the said movable panel (12) has a frame (14) which is configured so as to permit the discharge, as a result of gravity, of at least part of the said water towards at least one of the said guide fingers (18).

7. Closing device (10) according to any of claims 1 to 6, **characterised in that** the said rail (16, 17) has means for guiding the water towards at least one of its ends at the front or rear of the said vehicle.

8. Closing device (10) according to claim 7, **characterised in that** the said guide means comprise an evacuating channel formed in a portion of the said rail (16, 17).

9. Closing device (10) according to any of claims 1 to 8, **characterised in that** the said movable panel (12) has a curve in at least two horizontal directions, so as to cause the said water to run off towards at least one of its edges.

10. Motor vehicle comprising at least one opening arranged in the bodywork of its roof, **characterised in that** the said vehicle comprises at least one closing device (10) according to any of claims 1 to 9, which is fixed to the said bodywork in a flush manner for the purpose of closing the said opening.

## Patentansprüche

1. Verschlussvorrichtung (10) für eine Öffnung in dem Dach eines Kraftfahrzeugs, die einen stationären verglasten Teil (11) aufweist, der dazu bestimmt ist, an dem Fahrzeug befestigt zu werden, und wenigstens eine verglaste Tafel (12), die in Bezug zu dem stationären Teil (11) zwischen einer Verschlussposition, in der sie eine in dem stationären Teil (11) definierte Öffnung (13) verschließt, und mindestens einer Öffnungsposition beweglich ist, in der die Öffnung (13) wenigstens teilweise freigegeben ist,
wobei die bewegliche Tafel (12) gleitend entlang zweier Schienen (16, 17) geführt wird, die an der Fläche des stationären Teils (11) befestigt sind, wobei die Vorrichtung Mittel zum Rückgewinnen mindestens eines Teils des auf der äußeren Oberfläche der beweglichen Tafel (12) erhalten Wassers und zum Ableiten zur Außenseite des Fahrzeugs aufweist,
Vorrichtung **dadurch gekennzeichnet, dass** die Rückgewinnungs- und Ableitungsmittel mindestens eine Passage (31) aufweisen, die von einem Führungsfinger (18) der beweglichen Tafel (12) durchgehend in einer der Schienen (16, 17) ausgebildet ist, um den Durchgang des Wassers von der beweglichen Tafel (12) zu einer der Schienen zu erlauben,
und dadurch, dass sie Mittel zum Verschließen mindestens eines Zugangs zu den Rückgewinnungs- und Ableitungsmitteln in der Verschlussposition aufweist, die derart konfiguriert sind, dass die Ableitungsmittel daran gehindert werden, das Wasser in der Verschlussposition zu aufzunehmen.

2. Verschlussvorrichtung (10) nach Anspruch 1, **dadurch gekennzeichnet, dass** die Verschlussmittel aus Mitteln zum Abdichten der Öffnung (13) ausgebildet sind, während sich die bewegliche Tafel (12) in der Verschlussposition befindet.

3. Verschlussvorrichtung (10) nach Anspruch 2, **dadurch gekennzeichnet, dass** die Mittel zum Abdichten der Öffnung (13) mindestens eine Dichtung (19) aufweisen, die derart montiert ist, dass sie in Verschlussposition gegen die Seite des stationären Teils (11) komprimiert wird, die zu dem Inneren des Fahrzeugs gerichtet ist,
wobei die Zugänge zu den Rückgewinnungs- und Ableitungsmitteln mindestens einen in einem Rahmen (14) der beweglichen Tafel (12) ausgebildeten Wasserdurchgang aufweisen, der durch die Dichtung (19) verstopft ist, wenn diese komprimiert ist.

4. Verschlussvorrichtung (10) nach einem der Ansprüche 1 bis 3, **dadurch gekennzeichnet, dass** die Rückgewinnungs- und Ableitungsmittel mindestens ein Rinnenelement (22) aufweisen, das an einem Rahmen (14) der beweglichen Tafel (12) befestigt oder als solcher ausgebildet ist.

5. Verschlussvorrichtung (10) nach Anspruch 4, **dadurch gekennzeichnet, dass** sich das Rinnenelement wenigstens teilweise auf die Fahrgastzelle des Fahrzeugs gegenüber dem stationären Teil (11) ausdehnt.

6. Verschlussvorrichtung (10) nach einem der Ansprüche 1 bis 5, **dadurch gekennzeichnet, dass** die bewegliche Tafel (12) einen Rahmen (14) aufweist, der dazu konfiguriert ist, das schwerkraftbedingte Abfließen wenigstens eines Teils des Wasser zu mindestens einem der Führungsfinger (18) zu erlauben.

7. Verschlussvorrichtung (10) nach einem der Ansprüche 1 bis 6, **dadurch gekennzeichnet, dass** die Schiene (16, 17) Mittel zum Führen des Wassers in Richtung mindestens eines ihrer Enden an der Vorderseite oder an der Rückseite des Fahrzeugs aufweist.

8. Verschlussvorrichtung (10) nach Anspruch 7, **dadurch gekennzeichnet, dass** die Führungsmittel einen Ableitkanal aufweisen, der in einem Abschnitt der Schiene (16, 17) ausgebildet ist.

9. Verschlussvorrichtung (10) nach einem der Ansprüche 1 bis 8, **dadurch gekennzeichnet, dass** die bewegliche Tafel (12) eine Wölbung in mindestens zwei horizontale Richtungen derart aufweist, dass das Wasser in Richtung mindestens eines ihrer Ränder rieselt.

10. Kraftfahrzeug, das mindestens eine in der Karosserie seines Daches eingerichtete Öffnung aufweist, **dadurch gekennzeichnet, dass** es mindestens eine Verschlussvorrichtung (10) nach einem der Ansprüche 1 bis 9 aufweist, die bündig an der Karosserie fixiert ist, um die Öffnung zu verschließen.
